# EUROPÄISCHE PATENTSCHRIFT

(11) **EP 2 176 676 B1**
(45) Veröffentlichungstag und Bekanntmachung des Hinweises auf die Patenterteilung: **12.01.2011**
(21) Anmeldenummer: 08786521.8
(22) Anmeldetag: 28.07.2008
(51) Int. Cl.: G01S 3/789, G01S 5/28, G05D 1/02

(54) **VERFAHREN UND SYSTEM ZUM BESTIMMEN DER POSITION EINES MOBILEN GERÄTES IN BEZUG AUF EIN STATIONÄRES GERÄT, INSBESONDERE EINES AKKUMULATORBETRIEBENEN STAUBSAMMELROBOTERS IN BEZUG AUF EIN AKKUMULATOR-LADEGERÄT**
METHOD AND SYSTEM FOR DETERMING THE POSITION OF A MOBILE APPLIANCE RELATIVE TO A FIXED APPLIANCE, PARTICULARLY OF A STORAGE-BATTERY-OPERATED DUST COLLECTOR AUTOMATON RELATIVE TO A STORAGE-BATTERY CHARGER
PROCÉDÉ ET SYSTÈME PERMETTANT DE DÉTERMINER LA POSITION D'UN APPAREIL MOBILE PAR RAPPORT À UN APPAREIL FIXE, NOTAMMENT D'UN ROBOT COLLECTEUR DE POUSSIÈRE ALIMENTÉ PAR BATTERIE PAR RAPPORT À UN CHARGEUR DE BATTERIE

(30) Priorität: 02.08.2007 DE 102007036230
(43) Veröffentlichungstag der Anmeldung: 21.04.2010
(73) Patentinhaber: BSH Bosch und Siemens Hausgeräte GmbH, 81739 München (DE)
(72) Erfinder: MAASE, Jens, 93053 Regensburg (DE); HIRSCHFELD, Diane, 01108 Dresden (DE); KINAST, Gregor, 01239 Dresden (DE)
(86) Internationale Anmeldenummer: PCT/EP2008/059880
(87) Internationale Veröffentlichungsnummer: WO 2009/016152

(56) Entgegenhaltungen:
- DE-A1-102004 014 273
- US-A- 4 758 691
- US-A- 5 100 229
- US-A1- 2004 111 184

## Beschreibung

Die Erfindung bezieht sich auf ein Verfahren und ein System zum Bestimmen der Position und gegebenenfalls daraus abgeleitet zum Festlegen eines Fahrweges eines mobilen Gerätes, insbesondere eines selbstfahrenden akkumulatorbetriebenen Staubsammelroboters, zu einem stationären Gerät, insbesondere einem Akkumulator-Ladegerät, unter Heranziehung von Sendesignalen, die von dem stationären Gerät mit einer zumindest einmal rotierenden Sendecharakteristik übertragen werden, und unter Heranziehung eines von dem stationären Gerät abgegebenen Referenzsignals, in Bezug auf das die Lage der genannten Sendesignale festliegt, wobei in dem mobilen Gerät der Zusammenhang zwischen der Orientierung der einzelnen Sendesignale und dem Referenzsignal bekannt ist und wobei in dem mobilen Gerät dessen Position zu dem stationären Gerät aus der Zeitdifferenz zwischen dem Zeitpunkt des Empfangs des rotierenden Sendesignals mit maximaler Feldstärke und der Aussendung des Referenzsignals bestimmt wird. Die Erfindung bezieht sich ferner auf ein stationäres Gerät und ein mobiles Gerät für ein System der vorstehend genannten Art.

Es ist bereits ein Verfahren zur Positionsbestimmung eines mobilen Objekts unter Verwendung mindestens eines Funksignals mit rotierender Sendecharakteristik mindestens einer Referenzstation bekannt (DE 102 00 676 A1). Bei diesem bekannten Verfahren überprüft das mobile Objekt, welches z.B. durch Fahrzeuge, Roboter oder dergleichen gebildet sein kann, bei Detektion des Funksignals das Vorliegen eines Referenzereignisses, wobei dem mobilen Objekt der Zusammenhang zwischen der Orientierung der Sendecharakteristik und Referenzereignis bekannt ist. Das betreffende mobile Objekt ermittelt aus dem Referenzereignis die Orientierung der Sendecharakteristik und bestimmt aus der Orientierung der Sendecharakteristik eine relative Lage zur Referenzstation. Auf diese Weise ist zwar eine Positionsbestimmung, und zwar die Bestimmung der relativen Lage eines mobilen Objekts in Bezug auf mindestens eine Referenzstation ermöglicht. Eine Bestimmung des Abstands des betreffenden mobilen Objekts von der jeweiligen Referenzstation ist dabei allerdings nicht vorgesehen.

DE 10 2004 014 273 A1 offenbart ein Verfahren zur Bestimmung des Abstands und der relativen Winkellage zwischen einem mobilen und einem stationären Gerät. Der Abstand wird anhand der Zeitdifferenz zwischen dem Empfang eines Infrarot-Lichtsignals und eines Ultraschallsignals am mobilen Gerät berechnet. Die Winkellage wird mit Hilfe von richtungsabhängig kodierten Signalen bestimmt.

Es ist ferner ein Roboter-Lagebestimmungssystem bekannt (EP 1 435 555 A2), bei dem ein Roboter und eine Feststation vorgesehen sind, die über eine erste Sendeeinheit, welche eine Schallwelle, und zwar insbesondere eine Ultraschallwelle zur Ermittlung einer Position des Roboters aussendet, und eine zweite Sendeeinheit verfügt, die ein durch ein Infrarotsignal oder durch ein Hochfrequenzsignal gebildetes Synchronisiersignal bei Aussendung der Schallwelle aussendet. Der Roboter enthält eine erste Empfangseinheit mit zumindest zwei Schallsensoren sowie eine zweite Empfangseinheit für den Empfang des Synchronisiersignals und eine Abstands-Berechnungseinheit, die einen Abstand zwischen der ersten Sendeeinheit und der ersten Empfangseinheit unter Heranziehung einer Differenz zwischen dem Zeitpunkt, zu dem das Synchronisiersignal empfangen wird, und dem Zeitpunkt, zu dem die Schallwelle empfangen wird, berechnet. Außerdem enthält der Roboter eine Einfallswinkel-Berechnungseinheit, mit der ein Einfallswinkel der Schallwelle am Roboter unter Heranziehung einer Differenz zwischen den Empfangszeitpunkten der Schallwelle in den zumindest beiden Schallsensoren berechnet wird, die in der ersten Empfangseinheit enthalten sind. Dies setzt allerdings eine sehr genau arbeitende Einfallswinkel-Berechnungseinheit voraus, mit der die Berechnung des erwähnten Einfallswinkels der Schallwelle in den beiden Schallsensoren zu berechnen ist. Außerdem ist bei diesem bekannten Roboter Ortsbestimmungssystem die Leitfunktion der Feststation zugewiesen, da diese das erwähnte Schallsignal und das erwähnte Infrarotsignal selbständig, also ohne Mitwirkung des Roboters aussendet.

Im Zusammenhang mit dem gerade betrachteten bekannten Roboter-Ortungssystem ist überdies ein alternatives System bekannt, bei dem der Roboter einen ersten Sender, einen zweiten Empfänger und eine Distanz-Berechnungseinrichtung aufweist und bei dem die Feststation einen ersten Empfänger und einen zweiten Sender aufweist. Mittels des ersten Senders des Roboters wird ein Funksignal ausgesendet, welches durch den ersten Empfänger der Feststation empfangen wird. Die betreffende Feststation sendet daraufhin von ihrem zweiten Sender ein Funksignal aus, welches von dem ersten Empfänger des Roboters empfangen wird. Mittels der Distanz-Berechnungseinheit ist dann die Distanz des Roboters von der betreffenden Feststation aus den so gesendeten und empfangenen Funksignalen zu bestimmen. Auch diese Vorgehensweise setzt einen erheblichen Schaltungsaufwand hinsichtlich der erwähnten Distanz-Berechnungseinheit voraus, um verlässliche Werte für die Distanz zwischen dem erwähnten Roboter und der genannten Feststation zu erzielen. Ein solcher Aufwand wird jedoch häufig als unerwünscht angesehen.

Es ist auch schon ein insbesondere zur Bodenpflege dienendes Robotersystem mit einem Roboter und einer Fest- bzw. Basisstation bekannt (US 5 652 593), bei dem die Feststation ein Ortsbestimmungssignal an den Roboter zur Bestimmung des Abstands zwischen der betreffenden Feststation und dem Roboter abgibt. Dazu gibt der Roboter ein Triggersignal, insbesondere in Form eines Infrarot-Lichtsignals oder eines anderen elektromagnetischen Signals an die Feststation ab, um diese zu veranlassen, auf den Empfang dieses Signals hin ein Schallsignal, und zwar insbesondere im Ultraschallfrequenzbereich auszusenden. Anhand der Zeitdifferenz zwischen der Aussendung des insbesondere durch ein Infrarot-Lichtsignal gebildeten Triggersignals und dem Empfang des akustischen Signals im Roboter lässt sich der Abstand zwischen der Feststation und dem Roboter berechnen und gegebenenfalls zur Festlegung des Fahrweges des betreffenden Roboters zu der Feststation heranziehen. Für diese Festlegung ist aber zumindest eine zusätzliche Kenngröße erforderlich, nämlich die Kenntnis der Lage des betreffenden Roboters in Bezug auf die genannte Feststation. Diese zusätzliche Information wird bei dem betrachteten bekannten Robotersystem aus einem Rasterpfad gewonnen, der zusätzlich festgelegt sein muss. Damit ist jedoch wieder zusätzlicher Aufwand verbunden, den es allerdings in der Regel zu vermeiden gilt.

Der Erfindung liegt daher die Aufgabe zugrunde, einen Weg zu zeigen, wie bei einem Verfahren und einem System der eingangs genannten Art auf einfachere Weise als beim bisher bekannten Stand der Technik die Position und der Abstand und gegebenenfalls daraus abgeleitet die Festlegung eines Fahrweges eines mobilen Gerätes, insbesondere eines selbstfahrenden akkumulatorbetriebenen Staubsammelroboters in Bezug auf ein stationäres Gerät, insbesondere in Bezug auf ein Akkumulator-Ladegerät bestimmt werden kann.

Gelöst wird die vorstehend aufgezeigte Aufgabe zum einen bei einem Verfahren der eingangs genannten Art erfindungsgemäß dadurch, dass von dem mobilen Gerät zunächst ein Anforderungssignal in Form eines Ultraschallsignals an das stationäre Gerät, abgegeben wird,
dass von dem stationären Gerät sodann als Referenzsignal ein über die gesamte rotierende Sendecharakteristik reichendes Rundum-Lichtsignal nach einer festgelegten Zeitspanne auf den Empfang des genannten Ultraschallsignals hin abgegeben wird, dass von dem stationären Gerät anschließend als Sendesignale mit der rotierenden Sendecharakteristik nach einer festgelegten Zeitspanne auf die Abgabe des betreffenden Rundum-Lichtsignals hin Einzel-Lichtsignale in einer zeitlich festgelegten Folge abgegeben werden und dass aus der Zeitdifferenz zwischen der Abgabe des Ultraschallsignals von dem mobilen Gerät und dem Empfang des Rundum-Lichtsignals in dem mobilen Gerät die Entfernung des mobilen Geräts in Bezug auf das stationäre Gerät und aus der Zeitdifferenz zwischen dem in dem mobilen Gerät empfangenen Rundum-Lichtsignal und dem anschließend in dem mobilen Gerät mit maximaler Stärke empfangenen Einzel-Lichtsignal von den entsprechend der rotierenden Sendecharakteristik abgegebenen Einzel-Lichtsignalen die Lage des mobilen Geräts in Bezug auf das stationäre Gerät unter Berücksichtigung des bekannten Zusammenhangs zwischen der Orientierung der Einzel-Lichtsignale und dem Rundum-Lichtsignal bestimmt werden. Es sei hier angemerkt, dass unter einem Rundum-Lichtsignal hier die gleichzeitige Lichtsignalabgabe von sämtlichen für die Abgabe der Einzel-Lichtsignale vorgesehenen Lichtabgabeeinrichtungen zu verstehen ist. Das Rundum-Lichtsignal kann dabei als so genannter Rundum-Lichtblitz abgegeben werden, und die Einzel-Lichtsignale können als Einzel-Lichtblitze abgegeben werden.

Die Erfindung bringt den Vorteil mit sich, dass auf einfachere Weise als beim eingangs betrachteten Stand der Technik die Position, das heißt die relative Lage des mobilen Geräts in Bezug auf das stationäre Gerät und der Abstand des mobilen Geräts in Bezug auf das stationäre Gerät bestimmt werden können. Dabei kann diese Bestimmung von dem mobilen Gerät je nach Bedarf beliebig oft vorgenommen werden, indem von dem betreffenden mobilen Gerät jeweils das erwähnte Anforderungssignal abgegeben wird, auf dessen Empfang das stationäre Gerät dann jeweils mit der Aussendung eines Rundum-Lichtsignals als Referenzsignal und der nachfolgenden Einzel-Lichtsignale reagiert.

Vorzugsweise werden von dem stationären Gerät Infrarot-Lichtimpulse mit jeweils festgelegter Dauer als Lichtsignale abgegeben. Hierdurch ergibt sich der Vorteil, dass ein störungsfreier Betrieb ohne sonst gegebenenfalls störende Lichterscheinungen ermöglicht ist.

Zweckmäßigerweise wird die Bestimmung der Entfernung und der relativen Lage des mobilen Geräts in Bezug auf das stationäre Gerät in dem mobilen Gerät vorgenommen. Dies bringt den Vorteil mit sich, dass in dem mobilen Gerät alle für die genannte Bestimmung erforderlichen Informationen selbst ermittelt und ausgewertet werden können.

Eine besonders einfache Verfahrensweise ergibt sich gemäß weiterer zweckmäßiger Ausgestaltung der Erfindung dadurch, dass von dem stationären Gerät die von diesem abgebbaren Lichtsignale und damit auch das jeweilige Rundum-Lichtsignal jeweils nur über einen festgelegten Winkelbereich von etwa 180° abgegeben werden. Dadurch kommt man in vorteilhafter Weise mit einer in abgegrenzten Bereichen und insbesondere in Räumen ausreichenden Ausleuchtung durch die betreffenden Lichtsignale und auch durch das Referenzsignal aus.

Zum anderen wird die oben aufgezeigte Aufgabe bei einem System der eingangs genannten Art erfindungsgemäß dadurch gelöst, dass mittels wenigstens eines Ultraschallsenders in dem mobilen Gerät ein Ultraschallsignal als Anforderungssignal an das stationäre Gerät abgebbar ist, dass von wenigstens einem in dem stationären Gerät vorgesehenen Lichtsender sodann als Referenzsignal ein über die gesamte rotierende Sendecharakteristik reichendes Rundum-Lichtsignal nach einer festgelegten Zeitspanne auf den Empfang des genannten Ultraschallsignals hin abgebbar ist, dass von dem wenigstens einen in dem stationären Gerät vorgesehenen Lichtsender anschließend als Sendesignale mit der rotierenden Sendecharakteristik nach einer festgelegten Dauer auf die Abgabe des betreffenden Rundum-Lichtsignals hin Einzel-Lichtsignale in einer zeitlich festgelegten Folge abgebbar sind und dass aus der Zeitdifferenz zwischen der Abgabe des Ultraschallsignals von dem wenigstens einen Ultraschallsignalsender des mobilen Geräts und dem Empfang des Rundum-Lichtsignals mittels wenigsten eines Lichtempfangselements in dem mobilen Gerät die Entfernung des mobilen Geräts in Bezug auf das stationäre Gerät und aus der Zeitdifferenz zwischen dem in dem mobilen Gerät empfangenen Rundum-Lichtsignal und dem anschließend in dem mobilen Gerät mittels des wenigsten einen Lichtempfangselements mit maximaler Stärke empfangenen Einzel-Lichtsignal von den entsprechend der rotierenden Sendecharakteristik abgegebenen Einzel-Lichtsignalen die Lage des mobilen Geräts in Bezug auf das stationäre Gerät unter Berücksichtigung des bekannten Zusammenhangs zwischen der Orientierung der Einzel-Lichtsignale und dem Rundum-Lichtsignal bestimmbar sind.

Hierdurch ergibt sich der Vorteil, dass mit relativ geringem Aufwand und damit auf besonders einfache Weise die Position, das heißt die relative Lage des mobilen Geräts in Bezug auf das stationäre Gerät und der Abstand des mobilen Geräts in Bezug auf das stationäre Gerät bestimmt werden können. Dabei kann diese Bestimmung von dem mobilen Gerät je nach Bedarf beliebig oft vorgenommen werden, indem von dem betreffenden mobilen Gerät jeweils das erwähnte Anforderungssignal abgegeben wird, auf dessen Empfang das stationäre Gerät dann jeweils mit der Aussendung eines Rundum-Lichtsignals als Referenzsignal und der nachfolgenden Einzel-Lichtsignale reagiert.

Zweckmäßigerweise sind bei dem System gemäß der Erfindung von dem wenigstens einen in dem stationären Gerät vorgesehenen Lichtsender als Referenzsignal und als Sendesignale Infrarotsignale in Form von Lichtimpulsen mit jeweils festgelegter Dauer abgebbar. Hierdurch ergibt sich der Vorteil, dass in dem System gemäß der Erfindung mit in dessen Anwendungsbereich nicht störenden Lichtsignalen bzw. -impulsen zuverlässig gearbeitet werden kann.

Die vorliegende Erfindung betrifft ferner ein stationäres Gerät für ein System gemäß der Erfindung. Dieses stationäre Gerät weist für die Abgabe des Referenzsignals und der Sendesignale als Lichtsignale, insbesondere als Infrarotlichtsignale eine Reihe von entsprechend der rotierenden Sendecharakteristik angeordneten Lichtabgabeelementen auf, und für den Empfang eines Anforderungssignals als Ultraschallsignal weist es zumindest einen Ultraschallempfänger auf. Hierdurch ergibt sich der Vorteil eines besonders geringen Geräteaufwands hinsichtlich des Sendens und Empfangens der genannten Signale.

Zweckmäßigerweise sind die Lichtabgabeelemente durch Leuchtdioden gebildet. Dies bringt den Vorteil eines ganz besonders geringen Aufwands für die Lichtabgabeelemente mit sich.

Die vorliegende Erfindung betrifft ferner ein mobiles Gerät für ein System gemäß der Erfindung. Dieses mobile Gerät weist zumindest einen Ultraschallsignalsender für die Abgabe eines Anforderungssignals als Ultraschallsignal an das stationäre Gerät und zumindest ein Lichtempfangselement, insbesondere ein Infrarotlichtempfangselement für den Empfang des Rundum-Lichtsignals und der Einzel-Lichtsignale, insbesondere im Infrarotlichtbereich von dem stationären Gerät auf. Damit ergibt sich der Vorteil eines besonders geringen Geräteaufwands hinsichtlich des Sendens des genannten Anforderungssignals und des Empfangens der jeweiligen Lichtsignale. Das Lichtempfangselement kann aus mehreren Einzelempfangselementen, insbesondere Photodioden, zusammengesetzt sein, die derart zueinander angeordnet sind, dass sich für das Lichtempfangselement eine 360"-Empfangscharakteristik in der Horizontalen ergibt. Vorzugsweise sind die Einzelempfangselemente derart angeordnet, dass die Empfangscharakteristiken von benachbarten Einzelempfangselementen überlappen. Auf diese Weise ist die 360°-Empfangscharakteristik des Lichtempfangselements sicher gewährleistet und es treten keine blinden Bereiche auf.

Anhand einer Zeichnung wird die vorliegende Erfindung nachstehend an einem Ausführungsbeispiel näher erläutert.
- Fig. 1: zeigt in einer schematischen Darstellung ein System gemäß einer Ausfüh- rungsform der vorliegenden Erfindung.
- Fig. 2: zeigt ein Diagramm, auf das im Zuge der Erläuterung des in Fig. 1 darge- stellten Systems Bezug genommen wird.

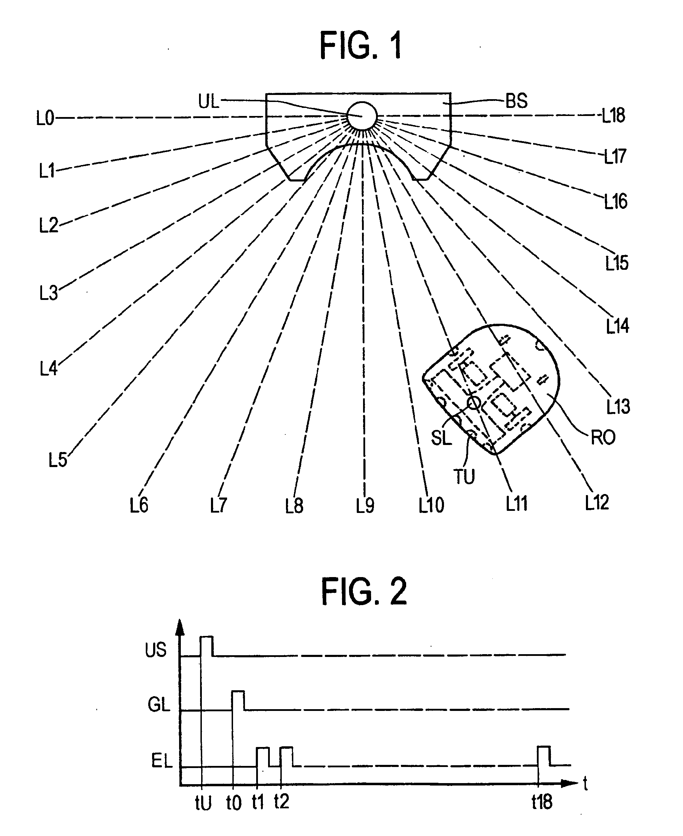

In Fig. 1 ist in einer schematischen Darstellung ein System gemäß einer Ausführungsforrn der vorliegenden Erfindung veranschaulicht, bei dem es sich um ein Robotersystem und insbesondere um ein Staubsammelrobotersystem handelt, welches zumindest ein mobiles Gerät bzw. einen Roboter, und zwar insbesondere einen selbstfahrenden akkumulatorbetriebenen Staubsammelroboter RO und ein stationäres Gerät, insbesondere ein durch eine so genannte Basisstation BS gebildetes Akkumulator-Ladegerät handelt.

Der in Fig. 1 als Staubsammelroboter dargestellte Roboter RO weist, wie in Fig. 1 durch gestrichelte Linien angedeutet, einen im linken Bereich vorgesehenen Staubsammelkanal auf, durch den aufgesammelter Staub bzw. Schmutzpartikel zu einem Staubsammelbehälter hin leitbar sind, der im hinteren Bereich des Roboters RO durch gestrichelte Linien angedeutet ist. Daneben verfügt der Roboter RO durch zwei in Fig. 1 nicht näher bezeichnete Antriebe, jeweils mit einem Antriebsrad und zugehörigem Antriebsmotor. Im hinteren Bereich weist der Roboter RO noch Stützrollen bzw. -träger auf. Für die Ausführung des Verfahrens weist der Roboter RO gemäß der vorliegenden Erfindung zumindest einen Ultraschallsignalsender TU; in Fig. 1 ist nur eine solcher Ultraschallsignalsender TU bezeichnet, Ferner weist der Roboter RO einen Lichtsignalempfänger SL auf, der beispielsweise auf der Oberseite des Roboters RO angeordnet sein kann. Dieser Lichtsignalempfänger SL kann beispielsweise aus drei Einzelempfängern (nicht gezeigt) zusammengesetzt sein, die jeweils eine horizontale Empfangscharakteristik, d.h. einen Empfangswinkel, von 120 Grad aufweisen und derart zueinander in einem Dreieck angeordnet sind, dass sich insgesamt für den Lichtsignalempfänger SL eine horizontale Empfangscharakteristik von 360 Grad ergibt. Bevorzugt haben die Einzelempfänger einen Empfangswinkel von 140 bis 160 Grad, wobei sich die Empfangswinkel von benachbarten Einzelempfängern überlappen.

Das als Basisstation BS in Fig. 1 dargestellte Akkumulator-Ladegerät für den akkumulatorbetriebenen Roboter RO weist in seinem in Fig. 1 unten dargestellten Bereich eine Ausnehmung auf, die entsprechend der Außenform des hinteren Teiles des Roboters RO ausgebildet ist. In dieser Ausnehmung sind zwei Ladeelektroden (in Fig. 1 nicht näher dargestellt) untergebracht, durch die im hinteren Teil des Roboters RO an an entsprechenden Stellen vorgesehenen Elektroden (ebenfalls in Fig. 1 nicht näher dargestellt) Ladeenergie von der Basisstation BS an den Roboter RO abgebbar ist, wenn dieser in der Basisstation BS dadurch angedockt hat, dass er mit seinem hinteren Bereich in der genannten Ausnehmung der Basisstation BS aufgenommen ist.

In der Basisstation BS sind in einem mittleren oberen Bereich, wie in einem Aufsatz, ein Ultraschallsignalempfänger und ein Lichtsignalsender UL gemeinsam untergebracht. Der Ultraschallsignalempfänger dient zur Aufnahme von Ultraschallsignalen, die von wenigstens einem Ultraschallsignalsender TU des Roboters RO abgegeben werden, und der Lichtsignalsender dient zur Abgabe von nachstehend näher erläuterten Lichtsignalen, die insbesondere im Infrarotlichtbereich liegen. Die betreffenden Lichtsignale werden, wie in Fig. 1 angedeutet, von dem Lichtsignalsender des Ultraschallsignalempfängers/ Lichtsignalsenders UL in unterschiedlichen Richtungen über einen Winkelbereich von etwa 180° abgegeben, und zwar als jeweils gerichtete Einzel-Lichtsignale L0, L1, L2, L3, L4, L5, L6, L7, L8, L9, L10, L11, L12, L13, L14, L15, L16, L17 und L18 mit einem gegenseitigen Winkelabstand von jeweils 10°. Dieser Winkelabstand kann beispielsweise zwischen 5° und 20° liegen. Die in Fig. 1 schematisch dargestellten Lichtsignallinien geben dabei jeweils die Hauptintensitätsachse des jeweiligen Lichtstrahls an, der in Form einer Strahlkeule mit einer zur Keulenaußenseite abnehmenden Intensität abgegeben wird.

Nachdem das in Fig. 1 in einer Draufsicht schematisch dargestellte System gemäß einer Ausführungsform der vorliegenden Erfindung erläutert worden ist, wird nunmehr das Verfahren gemäß der vorliegenden Erfindung unter Bezugnahme auf das in Fig. 2 dargestellte Diagramm näher erläutert.

In dem Diagramm gemäß Fig. 2 ist in der Ordinatenrichtung das Auftreten verschiedener Impulse festgelegt, und in der Abszissenrichtung, welche eine Zeitachse t darstellt, sind verschiedene Zeitpunkte bezeichnet, zu denen die zuvor erwähnten Impulse auftreten. In der in Fig. 2 in Ordinatenrichtung mit US bezeichneten Zeile ist ein Ultraschallsignal, genauer gesagt ein Ultraschallimpuls dargestellt, der von zumindest einem der Ultraschallsignalsender TU des Roboters, vorzugsweise jedoch von dessen sämtlichen Ultraschallsignalsendern als Anforderungssignal für ein Bestimmen des Abstands und der Position und gegebenenfalls daraus abgeleitet zum Festlegen eines Fahrweges des betreffenden Roboters RO zu der Basisstation BS abgegeben wird. Diese Abgabe des Ultraschallsignals US kann von dem Roboter RO beispielsweise dadurch erfolgen, dass diesem gerade keine brauchbare Information zum Zurückfahren zu der Basisstation BS vorliegt und eine Aufladung des robotereigenen Akkumulators durch die Basisstation BS erforderlich ist.

Auf den Empfang dieses Ultraschallsignals US von dem Ultraschallsignalempfänger des gemeinsamen Ultraschallsignalempfänger-/Lichtsignalsenders UL der Basisstation BS hin gibt dieser Ultraschallempfänger-/Lichtsender UL ein Rundum-Lichtsignal GL in Form eines Lichtblitzes, vorzugsweise im Infrarotlichtbereich ab, der mittels des Lichtsignalempfängers SL in dem Roboter RO empfangen wird. Durch den Empfang dieses Rundum-Lichtsignals GL wird der Roboter RO gewissermaßen synchronisiert für den anschließenden Empfang eines der nach einer festgelegten Zeitspanne auf die Abgabe des betreffenden Rundum-Lichtsignals GL hin abgegebenen Einzel-Lichtsignals der Lichtsignale L0 bis L18, ebenfalls vorzugsweise in Form jeweils eines im Infrarotlichtbereich auftretenden Lichtimpulses mit maximaler Intensität. Diese Einzel-Lichtsignale EL werden gemäß Fig. 2 nach der festgelegten Zeitspanne t0 bis t1 ab dem Zeitpunkt t1 bis zum Zeitpunkt t18 von dem Lichtsignalsender des Ultraschallempfänger/Lichtsignalsenders UL der Basisstation BS aufeinanderfolgend abgegeben.

Der vorstehend erläuterte zeitliche Zusammenhang zwischen der Orientierung, das heißt die Ausrichtung der Einzel-Lichtsignale EL in dem Rundum-Lichtsignal GL ist dem Roboter RO bekannt, sei es durch ursprüngliche Implementierung im Roboter RO oder durch eine einmalige oder wiederholte Übertragung von der Basisstation BS zu dem betreffenden Roboter RO.

An Hand der vorstehend erläuterten, von dem Roboter RO und der Basisstation BS jeweils ausgesendeten und empfangenen Signalen ist es nunmehr möglich, durch die Bewertung der Zeitdifferenz zwischen dem Zeitpunkt tU der Aussendung eines Ultraschallsignals US und dem Zeitpunkt t0 des Aussendens eines Rundum-Lichtsignals GL von der Basisstation BS und damit auch durch den Empfang des betreffenden Rundum-Lichtsignals GL durch den Roboter RO den Abstand des Roboters RO von der Basisstation BS zu bestimmen. Hierfür braucht lediglich die Ausbreitungsgeschwindigkeit des Ultraschallsignals US herangezogen zu werden, während die Ausbreitungsgeschwindigkeit des Rundum-Lichtsignals GL, also die Lichtgeschwindigkeit, hierfür unberücksichtigt gelassen werden kann, da sie sehr viel größer ist als die Ausbreitungsgeschwindigkeit des Ultraschallsignals US.

Zusätzlich ist aus den zwischen dem Roboter RO und der Basisstation BS gesendeten und empfangenen Signalen, wie sie vorstehend erläutert worden sind, die Lage des Roboters RO in Bezug auf die Basisstation BS unter Berücksichtigung des bekannten Zusammenhangs zwischen der Orientierung der Einzel-Lichtsignale EL und dem Rundum-Lichtsignal GL bestimmbar. Dadurch, dass der Roboter RO mit seinem Lichtsignalempfänger SL bei der in Fig. 1 gezeigten schematischen Darstellung beispielsweise das Einzel-Lichtsignal L11 mit maximaler Intensität von sämtlichen von der Basisstation BS abgestrahlten Einzel-Lichtsignalen L0 bis L18 ermittelt, ist in dem Roboter RO bekannt, dass er sich in Bezug auf die Abgaberichtung des Einzel-Lichtsignals L0 in einer Lage von 110° befindet. Damit stehen dem Roboter RO aber bereits zwei wesentliche Positionsinformationen zur Verfügung, die für sein Fahren zur Basisstation BS notwendig sind, nämlich Abstand und Fahrwinkel in Bezug auf eine Bezugsebene (festgelegt durch das Einzel-Lichtsignal L0 bzw. L18 und auch durch das Einzel-Lichtsignal L18). Um den Roboter RO in dieser Situation zur Basisstation BS fahren zu lassen, benötigt dieser noch eine Anfahrinformation, die ausgehend von den vorstehend betrachteten gewonnenen Informationen bezüglich des Abstands und der Lageposition noch gesondert zu gewinnen sind, beispielsweise durch eine weitere Abstands- und Positionsermittlung aufgrund einer Wiederholung der vorstehend erläuterten Vorgänge der Abgabe und des Empfangs von Signalen durch den Roboter RO und die Basisstation BS und durch Ausrichten des Roboters RO mit seiner die erwähnten Ladekontakte aufweisenden Rückseite auf ein mit dem betreffenden Roboter mit maximaler Intensität empfangenen Einzel-Lichtsignals, wie des Einzel-Lichtsignals L9 der von der Basisstation BS abgegebenen Einzel-Lichtsignale L0 bis L18. Auf diese Vorgänge soll jedoch hier nicht näher eingegangen werden.

Abschließend sei noch angemerkt, dass der vorstehend erläuterte Vorgang der Bestimmung der Lage des mobilen Gerätes RO in Bezug auf das stationäre Gerät BS in Abweichung von den zuvor erläuterten Verhältnissen nicht durch das gemäß Fig. 2 zum Zeitpunkt t0 abgegebene RunduM-Lichtsignal ausgelöst sein kann, sondern durch ein weiteres, zwischen den Zeitpunkten t0 und t1 gemäß Fig. 2 abgegebenes gesondertes Rundum-Lichtsignal.

### Bezugszeichenliste

- BS: Basisstation
- EL: Einzel-Lichtsignale
- GL: Rundum-Lichtsignal
- L0,L1,L2,L3,L4, L5,:
- L6, L7, L8, L9, L10,:
- L11, L12, L13, L14,:
- L15, L16, L17, L18: Lichtsignale
- RO: Roboter
- SL: Lichtsignalempfänger
- t: Zeitachse
- t0: Zeitpunkt der Rundum-Lichtabgabe
- t1, t2, t18: Zeitpunkte der Abgabe von Einzel-Lichtsignalen
- TU: Ultraschallsignalsender
- tU: Zeitpunkt der Ultraschallsignalabgabe
- UL: Ultraschallsignalempfänger/Lichtsignalsender
- US: Ultraschallsignal

## Patentansprüche

1. Verfahren zum Bestimmen der Position und gegebenenfalls daraus abgeleitet zum Festlegen eines Fahrweges zumindest eines mobilen Gerätes, insbesondere eines selbstfahrenden akkumulatorbetriebenen Staubsammelroboters, zu einem stationären Gerät, insbesondere einem Akkumulator-Ladegerät, unter Heranziehung von Sendesignalen, die von dem stationären Gerät mit einer zumindest einmal rotierenden Sendecharakteristik übertragen werden, und unter Heranziehung eines von dem stationären Gerät abgegebenen Referenzsignals, in Bezug auf das die Lage der genannten Sendesignale festliegt, wobei in dem mobilen Gerät der Zusammenhang zwischen der Orientierung der einzelnen Sendesignale und dem Referenzsignal bekannt ist und wobei in dem mobilen Gerät dessen Position zu dem stationären Gerät aus der Zeitdifferenz zwischen dem Zeitpunkt des Empfangs des rotierenden Sendesignals mit maximaler Feldstärke und der Aussendung des Referenzsignals bestimmt wird, **dadurch gekennzeichnet, dass** von dem mobilen Gerät (RO) zunächst ein Anforderungssignal in Form eines Ultraschallsignals (US) an das stationäre Gerät (BS) abgegeben wird, dass von dem stationären Gerät (BS) auf den Empfang des betreffenden Ultraschallsignals (US) hin sodann als Referenzsignal ein über die gesamte rotierende Sendecharakteristik reichendes Rundum-Lichtsignal (GL) nach einer festgelegten Zeitspanne auf den Empfang des genannten Ultraschallsignals (US) hin abgegeben wird, dass von dem stationären Gerät (BS) anschließend als Sendesignale mit der rotierenden Sendecharakteristik nach einer festgelegten Zeitspanne auf die Abgabe des betreffenden Rundum-Lichtsignals (GL) hin Einzel-Lichtsignale (EL) in einer zeitlich festgelegten Folge abgegeben werden und dass aus der Zeitdifferenz zwischen der Abgabe des Ultraschallsignals (US) von dem mobilen Gerät (RO) und dem Empfang des Rundum-Lichtsignals (GL) in dem mobilen Gerät (RO) die Entfernung des mobilen Geräts (RO) in Bezug auf das stationäre Gerät (BS) und aus der Zeitdifferenz zwischen dem in dem mobilen Gerät (RO) empfangenen Rundum-Lichtsignal (GL) und dem anschließend in dem mobilen Gerät (RO) mit maximaler Stärke empfangenen Einzel-Lichtsignal (z.B. bei L11) von den entsprechend der rotierenden Sendecharakteristik abgegebenen Einzel-Lichtsignalen (EL) die Lage (Winkellage) des mobilen Geräts (RO) in Bezug auf das stationäre Gerät (BS) unter Berücksichtigung des bekannten Zusammenhangs zwischen der Orientierung der Einzel-Lichtsignale (EL) und dem Rundum-Lichtsignal (GL) bestimmt werden.

2. Verfahren nach Anspruch 1, **dadurch gekennzeichnet, dass** von dem stationären Gerät (BS) Infrarot-Lichtimpulse von mit jeweils festgelegter Dauer als Lichtsignale (GL, EL) abgegeben werden.

3. Verfahren nach Anspruch 1 oder 2, **dadurch gekennzeichnet, dass** die Bestimmung der Entfernung und der Lage des mobilen Geräts (RO) in Bezug aus das stationäre Gerät (BS) in dem mobilen Gerät (RO) vorgenommen wird.

4. Verfahren nach einem der Ansprüche 1 bis 3, **dadurch gekennzeichnet, dass** von dem stationären Gerät (BS) die von diesem abgebbaren Sendesignale (GL, EL) jeweils nur über einen festgelegten Winkelbereich von etwa 180° abgegeben werden.

5. System mit zumindest einem mobilen Gerät, insbesondere einem selbstfahrenden akkumulatorbetriebenen Staubsammelroboter, und einem stationären Gerät, insbesondere einem Akkumulator-Ladegerät für den jeweiligen akkumulatorbetriebenen Staubsammelroboter, zum Bestimmen der Position und gegebenenfalls daraus abgeleitet zum Festlegen eines Fahrweges des mobilen Geräts zu dem stationären Gerät, unter Heranziehung von Sendesignalen, die von dem stationären Gerät mit einer zumindest einmal rotierenden Sendecharakteristik übertragen werden, und unter Heranziehung eines von dem stationären Gerät abgegebenen Referenzsignals, in Bezug auf das die Lage der genannten Sendesignale festgelegt ist, wobei in dem mobilen Gerät der Zusammenhang zwischen der Orientierung der einzelnen Sendesignale und dem Referenzsignal bekannt ist und wobei in dem mobilen Gerät dessen Position zu dem stationären Gerät aus der Zeitdifferenz zwischen dem Zeitpunkt des Empfangs des rotierenden Sendesignals mit maximaler Feldstärke und der Aussendung des Referenzsignals bestimmt wird, **dadurch gekennzeichnet, dass** mittels wenigstens eines Ultraschallsignalsenders (TU) in dem mobilen Gerät (RO) als Anforderungssignal ein Ultraschallsignal abgebbar ist, dass von wenigstens einem in dem stationären Gerät (BS) vorgesehenen Lichtsender (UL) als Referenzsignal ein über die gesamte rotierende Sendecharakteristik reichendes Rundum-Lichtsignal nach einer festgelegten Zeitspanne auf den Empfang des genannten Ultraschallsignals hin abgebbar ist, dass von dem wenigstens einen in dem stationären Gerät (BS) vorgesehenen Lichtsender (UL) als Sendesignale mit der rotierenden Sendecharakteristik nach einer festgelegten Dauer auf die Abgabe des betreffenden Rundum-Lichtsignals (GL) hin Einzel-Lichtsignale (EL) in einer zeitlich festgelegten Folge abgebbar sind und dass aus der Zeitdifferenz zwischen der Abgabe des Ultraschallsignals (US) von dem wenigstens einen Ultraschallsignalsender (TU) des mobilen Geräts (RO) und dem Empfang des Rundum-Lichtsignals (GL) mittels wenigstens eines Lichtempfangselements (SL) in dem mobilen Gerät (RO) die Entfernung des mobilen Geräts (RO) in Bezug auf das stationäre Gerät (BS) und aus der Zeitdifferenz zwischen dem in dem mobilen Gerät (RO) empfangenen Rundum-Lichtsignal (GL) und dem anschließend in dem mobilen Gerät (RO) mittels des wenigstens einen Lichtempfangselements (LS) mit maximaler Stärke empfangenen Einzel-Lichtsignal (EL) von den entsprechend der rotierenden Sendecharakteristik abgegebenen Einzel-Lichtsignalen (EL) die Lage des mobilen Geräts (RO) in Bezug auf das stationäre Gerät (BS) unter Berücksichtigung des bekannten Zusammenhangs zwischen der Orientierung der Einzel-Lichtsignale (EL) und dem Rundum-Lichtsignal (GL) bestimmbar sind.

6. System nach Anspruch 5, **dadurch gekennzeichnet, dass** von dem wenigstens einen in dem stationären Gerät (BS) vorgesehenen Lichtsender (UL) als Referenzsignal (GL) und als Sendesignale (EL) Infrarotsignale in Form von Lichtimpulsen mit jeweils festgelegter Dauer abgebbar sind.

7. Stationäres Gerät für ein System nach Anspruch 5 oder 6, **dadurch gekennzeichnet,dass** es für die Abgabe des Referenzsignals (GL) und der Sendesignale (EL) als Lichtsignale, insbesondere als Infrarotlichtsignale eine Reihe von entsprechend der rotierenden Sendecharakteristik angeordneten Lichtabgabeelementen (UL) aufweist und dass es für den Empfang eines Anforderungssignals in Form des Ultraschallsignals (US) zumindest einen Ultraschallempfänger (UL) aufweist.

8. Stationäres Gerät nach Anspruch 7, **dadurch gekennzeichnet, dass** die Lichtabgabeelemente (UL) durch Leuchtdioden gebildet sind.

9. Mobiles Gerät für ein System nach Anspruch 5 oder 6, **dadurch gekennzeichnet, dass** es zumindest einen Ultraschallsignalsender (TU) für die Abgabe eines Anforderungssignals in Form des Ultraschallsignals an das stationäre Gerät (BS) aufweist und dass es zumindest ein Lichtempfangselement (SL), insbesondere ein Infrarotlichtempfangselement für den Empfang des Rundum-Lichtsignals (GL) und der Einzel-Lichtsignale (EL), insbesondere im Infrarotlichtbereich von dem stationären Gerät (BS) aufweist.

## Claims

1. Method of determining the position and, optionally derivative therefrom, fixing a travel path of at least one mobile appliance, particularly a self-propelled battery-operated dust collector robot, with respect to stationary apparatus, particularly a battery-charging apparatus, with utilisation of transmitted signals which are transmitted by the stationary apparatus with a transmission characteristic rotating at least once, and with utilisation of a reference signal output by the stationary apparatus, with respect to which the position of the said transmitted signals is fixed, wherein the correlation between the orientation of the individual transmitted signals and the reference signal is known in the mobile appliance and wherein in the mobile appliance the position thereof with respect to the stationary apparatus is determined from the time difference between the instant of reception of the rotating transmitted signal at maximum field strength and the transmission of the reference signal, **characterised in that** initially a demand signal in the form of an ultrasonic signal (US) is output by the mobile appliance (RO) to the stationary apparatus (BS), that on reception of the respective ultrasonic signal (US) an all-round optical signal (GL) extending over the entire rotating transmission characteristic is then output as reference signal by the stationary apparatus (BS) after a fixed period of time from reception of the said ultrasonic signal (US), that subsequently individual optical signals (EL) are output by the stationary apparatus (BS) in a sequence fixed in time as transmitted signals with the rotating transmission characteristic after a fixed period of time from the output of the respective all-round optical signal (GL) and that with consideration of the known correlation between the orientation of the individual optical signals (EL) and the all-round optical signal (GL) the distance of the mobile appliance (RO) with respect to the stationary apparatus (BS) is determined from the difference in time between the output of the ultrasonic signal (US) by the mobile appliance (RO) and the reception of the all-round optical signal (GL) in the mobile appliance (RO) and the position (angular position) of the mobile appliance (RO) with respect to the stationary apparatus (BS) is determined from the difference in time between the all-round optical signal (GL) received in the mobile appliance (RO) and the individual optical signal (for example at L11), which is subsequently received at maximum strength in the mobile appliance (RO), from the individual optical signals (EL) output in correspondence with the rotating transmission characteristic.

2. Method according to claim 1, **characterised in that** infrared light pulses with respectively fixed duration are output as optical signals (GL, EL) by the stationary apparatus (BS).

3. Method according to claim 1 or 2, **characterised in that** the determination of the distance and position of the mobile appliance (RO) with respect to the stationary apparatus (BS) is undertaken in the mobile appliance (RO).

4. Method according to any one of claims 1 to 3, **characterised in that** the transmitted signals (GL, EL) able to be output by the stationary apparatus (BS) are output by this in each instance only over a fixed angular range of approximately 180°.

5. System with at least one mobile appliance, particularly a self-propelled battery-operated dust collector robot, and a stationary apparatus, particularly a battery-charging apparatus for the respective battery-operated dust collector robot, for determining the position and, optionally derivative therefrom, fixing a travel path of the mobile appliance with respect to the stationary apparatus, with utilisation of transmitted signals which are transmitted by the stationary apparatus with a transmission characteristic rotating at least once, and with utilisation of a reference signal output by the stationary apparatus, with respect to which the position of the said transmitted signals is fixed, wherein the correlation between the orientation of the individual transmitted signals and the reference signal is known in the mobile appliance and wherein in the mobile appliance the position thereof with respect to the stationary apparatus is determined from the time difference between the instant of reception of the rotating transmitted signal at maximum field strength and the transmission of the reference signal, **characterised in that** an ultrasonic signal can be output as demand signal by means of at least one ultrasonic signal transmitter (TU) in the mobile appliance (RO), that an all-round optical signal extending over the entire rotating transmission characteristic can be output as reference signal by at least one optical transmitter (UL), which is provided in the stationary apparatus (BS), after a fixed period of time from reception of the said ultrasonic signal, that individual optical signals (EL) can be output in a sequence fixed in time by the at least one optical transmitter (UL), which is provided in the stationary apparatus (BS), as transmitted signals with the rotating transmission characteristic after a fixed period of time from the output of the respective all-round optical signal (GL) and that with consideration of the known correlation between the orientation of the individual optical signals (EL) and the all-round optical signal (GL) the distance of the mobile appliance (RO) with respect to the stationary apparatus (BS) can be determined from the difference in time between the output of the ultrasonic signal (US) by the at least one ultrasonic signal transmitter (TU) of the mobile appliance (RO) and the reception of the all-round optical signal (GL) by means of at least one light receiving element (SL) in the mobile appliance (RO) and the position of the mobile appliance (RO) with respect to the stationary apparatus (BS) can be determined from the difference in time between the all-round optical signal (GL) received in the mobile appliance (RO) and the individual optical signal (EL), which is subsequently received at maximum strength in the mobile appliance (RO) by means of the at least one light receiving element (LS), from the individual optical signals (EL) output in correspondence with the rotating transmission characteristic.

6. System according to claim 5, **characterised in that** infrared signals in the form of light pulses with respectively fixed duration can be output as reference signal (GL) and as transmitted signals (EL) by the at least one optical transmitter (UL) provided in the stationary apparatus (BS).

7. Stationary apparatus for a system according to claim 5 or 6, **characterised in that** for output of the reference signal (GL) and the transmitted signals (EL) as optical signals, particularly as infrared light signals, it comprises a series of light output elements (UL) arranged in correspondence with the rotating transmission characteristic and that for reception of a demand signal in the form of the ultrasonic signal (US) it comprises at least one ultrasonic receiver (UL).

8. Stationary apparatus according to claim 7, **characterised in that** the light output elements (UL) are formed by light-emitting diodes.

9. Mobile appliance for a system according to claim 5 or 6, **characterised in that** it comprises at least one ultrasonic signal transmitter (TU) for output of a demand signal in the form of the ultrasonic signal to the stationary apparatus (BS) and that it comprises at least one light receiving element (SL), particularly an infrared light receiving element, for reception of the all-round optical signal (GL) and the individual optical signals (EL), particularly in the infrared light range, from the stationary apparatus (BS).

## Revendications

1. Procédé pour déterminer la position et, le cas échéant, par dérivation, pour déterminer une course d'au moins un appareil mobile, en particulier d'un robot collecteur de poussière automoteur alimenté par accumulateur, par rapport à un appareil fixe, en particulier un chargeur d'accumulateur, en faisant appel à des signaux d'émission qui sont transmis par l'appareil fixe avec une caractéristique d'émission présentant au moins une rotation et en faisant appel à un signal de référence délivré par l'appareil fixe et par rapport auquel la position desdits signaux d'émission est déterminée, le rapport entre l'orientation des différents signaux d'émission et le signal de référence étant connu dans l'appareil mobile et, dans l'appareil mobile, la position de celui-ci par rapport à l'appareil fixe étant déterminée sur la base de la différence de temps entre l'instant de réception du signal d'émission rotatif avec une intensité de champ maximale et l'émission du signal de référence, **caractérisé en ce que**, tout d'abord, un signal de requête est délivré sous la forme d'un signal ultrasonique (US) par l'appareil mobile (RO) à l'appareil fixe (BS), **en ce que**, suite à la réception dudit signal ultrasonique (US), un signal lumineux omnidirectionnel (GL) couvrant l'ensemble de la caractéristique d'émission rotative est délivré en tant que signal de référence par l'appareil fixe (BS) après un laps de temps déterminé suite à la réception dudit signal ultrasonique (US), **en ce que** des signaux lumineux individuels (EL) sont ensuite délivrés dans un ordre temporel déterminé, en tant que signaux d'émission avec la caractéristique d'émission rotative, par l'appareil fixe (BS) après un laps de temps déterminé suite à la délivrance dudit signal lumineux omnidirectionnel (GL) et **en ce que** sont déterminées, compte tenu du rapport connu entre l'orientation des signaux lumineux individuels (EL) et du signal lumineux omnidirectionnel (GL), la distance entre l'appareil mobile (RO) et l'appareil fixe (BS) sur la base de la différence de temps entre la délivrance du signal ultrasonique (US) de l'appareil mobile (RO) et la réception du signal lumineux omnidirectionnel (GL) dans l'appareil mobile (RO) et, la position (position angulaire) de l'appareil mobile (RO) par rapport à l'appareil fixe (BS) sur la base de la différence de temps entre le signal lumineux omnidirectionnel (GL) reçu dans l'appareil mobile (RO) et le signal lumineux individuel (en L11, par exemple) parmi les signaux lumineux individuels (EL) délivrés conformément à la caractéristique d'émission rotative, qui est reçu ensuite avec une intensité maximale dans l'appareil mobile (RO).

2. Procédé selon la revendication 1, **caractérisé en ce que** des impulsions lumineuses infrarouges de durée déterminée dans chaque cas sont délivrées par l'appareil fixe (BS) en tant que signaux lumineux (GL, EL).

3. Procédé selon la revendication 1 ou 2, **caractérisé en ce que** la détermination de la distance et de la position de l'appareil mobile (RO) par rapport à l'appareil fixe (BS) est effectuée dans l'appareil mobile (RO).

4. Procédé selon l'une des revendications 1 à 3, **caractérisé en ce que** les signaux d'émission (GL, EL) délivrés par l'appareil fixe (BS) sont délivrés par celui-ci respectivement uniquement sur une plage angulaire déterminée d'approximativement 180°.

5. Système comportant au moins un appareil mobile, en particulier un robot collecteur de poussière automoteur alimenté par accumulateur, et un appareil fixe, en particulier un chargeur d'accumulateur pour le robot collecteur de poussière alimenté par accumulateur respectif, pour déterminer la position et, le cas échéant, par dérivation, pour déterminer une course de l'appareil mobile par rapport à l'appareil fixe en faisant appel à des signaux d'émission qui sont transmis par l'appareil fixe avec une caractéristique d'émission présentant au moins une rotation et en faisant appel à un signal de référence délivré par l'appareil fixe et par rapport auquel la position desdits signaux d'émission est déterminée, le rapport entre l'orientation des différents signaux d'émission et le signal de référence étant connu dans l'appareil mobile et, dans l'appareil mobile, la position de celui-ci par rapport à l'appareil fixe étant déterminée sur la base de la différence de temps entre l'instant de réception du signal d'émission rotatif avec une intensité de champ maximale et l'émission du signal de référence, **caractérisé en ce que**, tout d'abord, un signal ultrasonique peut être délivré en tant que signal de requête au moyen d'au moins un émetteur de signaux ultrasoniques (TU) dans l'appareil mobile (RO), **en ce qu'**un signal lumineux omnidirectionnel couvrant l'ensemble de la caractéristique d'émission rotative peut être délivré en tant que signal de référence par au moins un émetteur de lumière (UL) prévu dans l'appareil fixe (BS) après un laps de temps déterminé suite à la réception dudit signal ultrasonique (US), **en ce que** des signaux lumineux individuels (EL) peuvent être délivrés dans un ordre temporel déterminé, en tant que signaux d'émission avec la caractéristique d'émission rotative, par l'au moins un émetteur de lumière (UL) prévu dans l'appareil fixe (BS) après une durée déterminée suite à la délivrance dudit signal lumineux omnidirectionnel (GL) et **en ce que** peuvent être déterminées, compte tenu du rapport connu entre l'orientation des signaux lumineux individuels (EL) et du signal lumineux omnidirectionnel (GL), la distance entre l'appareil mobile (RO) et l'appareil fixe (BS) sur la base de la différence de temps entre la délivrance du signal ultrasonique (US) de l'au moins un émetteur de signaux ultrasoniques (TU) de l'appareil mobile (RO) et la réception du signal lumineux omnidirectionnel (GL) au moyen d'au moins un élément récepteur de lumière (SL) dans l'appareil mobile (RO) et, la position de l'appareil mobile (RO) par rapport à l'appareil fixe (BS) sur la base de la différence de temps entre le signal lumineux omnidirectionnel (GL) reçu dans l'appareil mobile (RO) et le signal lumineux individuel (EL) parmi les signaux lumineux individuels (EL) délivrés conformément à la caractéristique d'émission rotative, qui est reçu ensuite avec une intensité maximale dans l'appareil mobile (RO) au moyen de l'au moins un élément récepteur de lumière (LS).

6. Système selon la revendication 5, **caractérisé en ce que** peuvent être délivrés par l'au moins un émetteur de lumière (UL) prévu dans l'appareil fixe (BS), en tant que signal de référence (GL) et en tant que signaux d'émission (EL), des signaux infrarouges sous la forme d'impulsions lumineuses de durée respectivement déterminée.

7. Appareil fixe pour un système selon la revendication 5 ou 6, **caractérisé en ce qu'**il comporte, pour la délivrance du signal de référence (GL) et des signaux d'émission (EL) en tant que signaux lumineux, et plus particulièrement en tant que signaux lumineux infrarouges, une série d'éléments émetteurs de lumière (UL) disposés conformément à la caractéristique d'émission rotative et **en ce qu'**il comporte au moins un récepteur ultrasonique (UL) pour la réception d'un signal de requête sous la forme du signal ultrasonique (US).

8. Appareil fixe selon la revendication 7, **caractérisé en ce que** les éléments émetteurs de lumière (UL) sont constitués par des diodes luminescentes.

9. Appareil mobile pour un système selon la revendication 5 ou 6, **caractérisé en ce qu'**il comporte au moins un émetteur de signaux ultrasoniques (TU) pour la délivrance d'un signal de requête sous la forme du signal ultrasonique à l'appareil fixe (BS) et **en ce qu'**il comporte au moins un élément récepteur de lumière (SL), et plus particulièrement un élément récepteur de lumière infrarouge pour la réception du signal lumineux omnidirectionnel (GL) et des signaux lumineux individuels (EL) de l'appareil stationnaire (BS), en particulier dans la plage de lumière infrarouge.
